(19) Europäisches Patentamt
European Patent Office
Office européen des brevets

(11) EP 1 770 580 B1

(12) **EUROPEAN PATENT SPECIFICATION**

(45) Date of publication and mention of the grant of the patent:
**25.09.2013 Bulletin 2013/39**

(21) Application number: **06121450.8**

(22) Date of filing: **28.09.2006**

(51) Int Cl.:
***G06F 21/00*** *(2013.01)*

(54) **Apparatus and method for executing security function using smart card**

Gerät und Verfahren zum Ausführen von Sicherheitsfunktionen unter Verwendung einer Chipkarte

Appareil et méthode pour exécuter une fonction de sécurité en utilisant une carte à puce

(84) Designated Contracting States:
**DE GB NL**

(30) Priority: **30.09.2005 KR 20050092208**

(43) Date of publication of application:
**04.04.2007 Bulletin 2007/14**

(73) Proprietor: **Samsung Electronics Co., Ltd.**
**Suwon-si, Gyeonggi-do, 443-742 (KR)**

(72) Inventors:
- **Han, Se-hee**
  **Seoul (KR)**
- **Lee, Sung-min**
  **Yeongtong-gu**
  **Suwon-si**
  **Gyeonggi-do (KR)**

(74) Representative: **Grootscholten, Johannes A.M.**
**Arnold & Siedsma**
**Sweelinckplein 1**
**2517 GK Den Haag (NL)**

(56) References cited:
**WO-A1-03/067404** **WO-A2-02/056155**
**US-A- 5 265 221**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 770 580 B1

Printed by Jouve, 75001 PARIS (FR)

**Description**

Apparatuses and methods consistent with the present invention relate to executing a security function using a smart card and, more particularly, to safely switching among security consoles and acquiring ownership with respect to a controlled device by executing an electronic signature using a smart card.

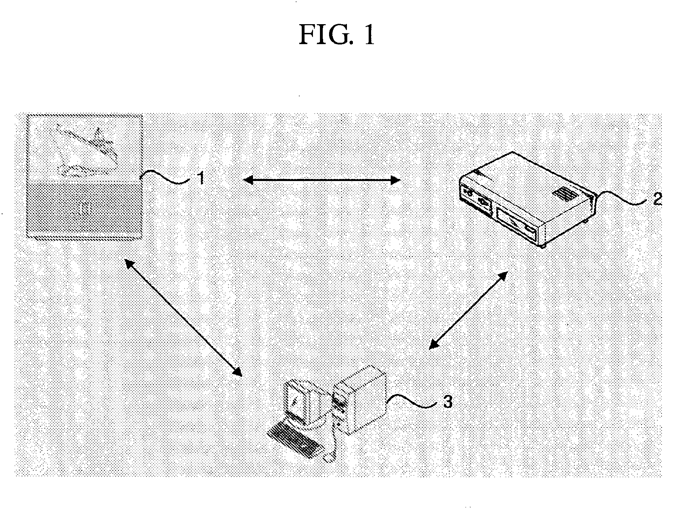

Figure 1 is a view illustrating the configuration of a typical Universal Plug and Play (UPnP) security framework which includes a security console 1, a controlled device 2, and a control point 3.

The security console 1 provides a user interface and services for managing an access control list of the controlled device 2. The security console 1 has a pair of public keys Ps and Ks and can create the access control list by using hash values of the public keys of the control point 3.

Further, the security console 1 should acquire ownership with respect to the controlled device 2 in order to manage the access control list of the controlled device 2. At this time, the security console 1 should know a password of the controlled device 2 in order to acquire the ownership with respect to the controlled device 2. In the case where the controlled device 2 has a display or print function, it is possible to create and provide a new password at the beginning. On the other hand, in the case where the controlled device 2 does not have a display or print function, a manufacturer can store a password, which is fixed during the manufacture of the controlled device 2, in the controlled device 2 and print the password on a label, such that the password can be provided together with the controlled device 2.

Then, a user who wishes to acquire the ownership with respect to the controlled device 2 inputs a password of the controlled device 2 by using the user interface of the security console 1. When the password is input, the controlled device 2 verifies the input password and then performs an ownership acquisition process in which the validity of an electronic signature is verified so that the security console 1 can acquire ownership authentication on the controlled device 2 and ownership acquisition with respect to the controlled device 2.

Thereafter, the security console 1 acquires the ownership with respect to the controlled device 2 by performing the ownership acquisition process.

Then, since the security console 1 has acquired the ownership, the security console 1 has a right to make a request for commands related to the access control list of the controlled device 2.

The controlled device 2 provides services with respect to an inherent function thereof. In addition, the controlled device 2 stores a password thereof, a pair of public keys Pd and Kd, an access control list, and owners list, and in response to a command request of the security console 1 or the control point 3, the controlled device 2 performs or rejects the command by referring to the stored values.

Furthermore, the controlled device 2 determines whether to grant the ownership in response to the ownership acquisition request of the security console 1 by referring to the password. After granting the ownership, the controlled device 2 registers hash values of public keys of the corresponding security console 1 in the owners list. In addition, in response to a control command with respect to the inherent function, the controlled device 2 determines whether to perform the command by referring to the access control list.

The control point 3 requests a control command with respect to the controlled device 2. For example, in the case when the controlled device 2 is an audio, the control point 3 can make a control for play, stop, record, or the like of the audio.

Further, the control point 3 that also serves as the security console 1 should be able to create session keys through a set session key (SetSessionKeys) action between the control point 3 and the controlled device 2. Further, when the control command is requested, a message should be able to be transmitted between the control point 3 and the controlled device 2 through the corresponding session. Here, the set session keys mean an electronic signature of data (for example, an access control list) transmitted through a communication channel and a symmetrical key necessary for encryption, when the communication channel is formed between the control point 3 (or security console) and the controlled device 2.

At this time, when the control point 3 requests the controlled device 2 to perform the control command through the session, the controlled device 2 determines whether to perform the control command by referring to hash values with respect to the public keys of the control point 3 and the control command in the access control list.

As such, the hash values of the public keys of the control point 3 are stored in the access control list. In order to supply the security console 1 with the hash values of the control point 3 which will be included in the access control list, the control point 3 supplies the hash values of the public keys thereof to the security console 1 by using a Present Key message.

However, there is a problem in that a user should know a password of the controlled device 2 in order to acquire the ownership of the controlled device 2 through the security console 1. In other words, since it is requested that the user have a different password for each controlled device 2 for the security, a difficulty occurs where the user should memorize a password of the controlled device 2 or look for a label attached on the controlled device 2 whenever the user wishes to acquire ownership.

In addition, the security console 1 and the control point 3 may be provided as separate devices or one device.

However, the case the security console 1 and the control point 3 are provided as one device is actually more frequent than the case in which a separate device serving only as the security console 1 is provided. In this case, in order that an unauthorized user cannot use the security console 1 of a device, a user should acquire authentication on the security console 1 separately from the password for acquiring ownership, which may degrade the usability of the device.

Further, when several devices each having a function of the security console 1 exist, the user should perform the ownership acquisition process each time when the devices change. That is, a problem occurs in that a password of a device should be newly input whenever the security console 1 changes.

Furthermore, in the case where the controlled device 2 supports single ownership even if several security consoles 1 exist, a problem occurs in that, until one of the security consoles 1 having ownership at the beginning relinquishes the ownership or the controlled device 2 is intentionally reset, the other security consoles 1 cannot possess the ownership with respect to the controlled device 2.

According to the present invention there is provided an apparatus and method as set forth in the appended claims. Preferred features of the invention will be apparent from the dependent claims, and the description which follows.

The present invention provides an apparatus and method capable of safely switch among security consoles, without revealing a secret key, by executing an electronic signature using a smart card.

The present invention also provides an apparatus and method which switch a control point to a security console by using a pair of public keys stored in a smart card without a separate authentication process.

According to an aspect of the present invention, there is provided an apparatus for executing a security function using a smart card, the apparatus including: a smart card read unit acquiring a public key of a security console by reading the smart card when the smart card is brought into contact with the smart card read unit or inserted into the smart card read unit; an authentication unit verifying validity of an electronic signature transmitted from the smart card by using the public key of the security console; and a switching unit switching the apparatus to a security console capable of acquiring ownership with respect to a controlled device if the electronic signature is determined to be valid.

According to another aspect of the present invention, there is provided an apparatus for executing a security function using a smart card, the apparatus including: a storage unit storing a pair of public keys of a security console; and an electronic signature execution unit creating an electronic signature by using a secret key stored in the storage unit.

According to still another aspect of the present invention, there is provided a method of executing a security function using a smart card, the method including: switching a control point to a security console that manages an access control list of a controlled device; requesting ownership acquisition with respect to the controlled device by means of the switched security console; and executing a function of the security console if the ownership is acquired as a result of the request.

The above and other aspects of the present invention will become more apparent by describing in detail exemplary embodiments thereof with reference to the attached drawings in which:

Figure 1 is a view illustrating the configuration of a typical UPnP security framework;

Figure 2 is a view illustrating a system of executing a security function using a smart card according to an exemplary embodiment of the present invention;

Figure 3 is a block diagram illustrating a control point of the system of executing the security function using the smart card according to an exemplary embodiment of the present invention;

Figure 4 is a block diagram illustrating a controlled device of the system of executing the security function using the smart card according to an exemplary embodiment of the present invention;

Figure 5 is a block diagram illustrating the smart card of the system of executing the security function using the smart card according to an exemplary embodiment of the present invention;

Figure 6 is a flow chart illustrating a method of performing a security function using the smart card according to an exemplary embodiment of the present invention;

Figure 7 is a flow chart illustrating an initialization process shown in Figure 6 in detail;

Figure 8 is a flow chart illustrating a detailed process in which a control point switches to a security console, which is shown in Figure 6, according to an exemplary embodiment of the present invention;

Figure 9 is a flow chart illustrating a detailed process in which the security console acquires ownership, which is shown in Figure 6, according to an exemplary embodiment of the present invention;

Figure 10 is a flow chart illustrating a detailed process of executing a function of the security console, which is shown in Figure 6, according to another exemplary embodiment of the present invention;

Figure 11 is a flow chart illustrating a detailed process of executing a function of the security console, which is shown in Figure 6, according to still another exemplary embodiment of the present invention; and

Figure 12 is a flow chart illustrating a process of creating a set session key in the method of executing the security function using the smart card according to the exemplary embodiment of the present invention.

Advantages and features of the present invention and methods of accomplishing the same may be understood more readily by reference to the following detailed description of preferred embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

Hereinafter, the present invention will be described with reference to flowchart illustrations of an apparatus and method for executing a security function using a smart card according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer- readable memory that can direct a computer or other programmable data processing apparatus to function in a particular manner, such that the instructions stored in the computer usable or computer- readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which comprises one or more executable instructions for implementing the specified logical function (s) . It should also be noted that in some alternative implementations, the functions noted in the blocks may occur out of the order. For example, two blocks shown in succession may be executed substantially concurrently or the blocks may sometimes be executed in the reverse order, depending upon the functionality involved.

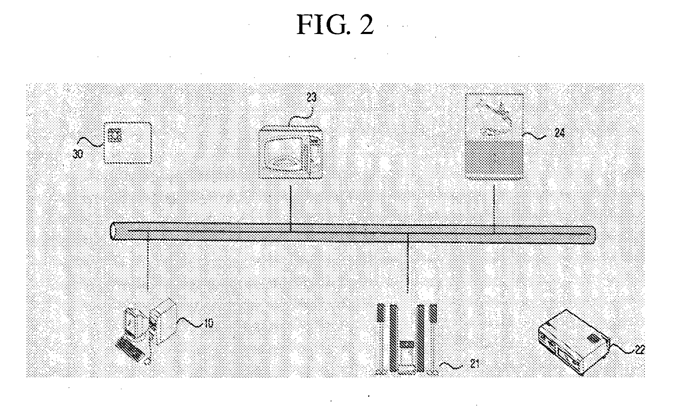

Figure 2 is a view illustrating a system of executing a security function using a smart card according to an exemplary embodiment of the present invention.

As shown in Figure 2, the system of executing the security function using the smart card includes a control point 10 that performs a function of a security console, a plurality of controlled devices 21, 22, 23, and 24, and a smart card 30.

The control point 10 controls the plurality of controlled devices 21, 22, 23, and 24 and performs the security console function of managing the access control list of the controlled devices 21, 22, 23, and 24. In the present invention, the security console device is not separately provided but the control point 10 also executes the security console function. Here, the control point 10 can be called a control point or a security console depending on a function thereof.

For example, in order for the control point 10 to execute the security console function (that is, switches to the security console), the validity of an electronic signature should be authenticated by verifying the electronic signature created in the smart card 30, and after the control point 10 has switched to the security console, the validity of the electronic signature or hash values should be authenticated by the controlled devices 21, 22, 23, and 24.

The controlled devices 21, 22, 23, and 24 provide operation and services according to the control of the control point 10. In addition, when the security console requests ownership acquisition with respect to the access control list of the controlled devices 21, 22, 23, and 24, the controlled devices 21, 22, 23, and 24 determine whether to perform an ownership acquisition process for the security console on the basis of a result of the validity verification of the electronic signature and the hash values.

The smart card 30 stores a pair of public keys (that is, a public key Ps and a private key Ks) of the security console. Here, the smart card 30, when a request of the control point 10 is made or a new device (a control point, a controlled device, etc.) is provided, comes in contact with the corresponding device or is inserted therein so as to transmit the public key of the security console). The smart card 30 is a portable storage medium that has a microchip capable of storing data.

Further, the smart card 30 can calculate hash values with respect to the public key and create an electronic signature by using the secret key of the security console. Here, since the electronic signature can be created by only the smart card 30, it is possible to prevent the secret key of the security console from being revealed.

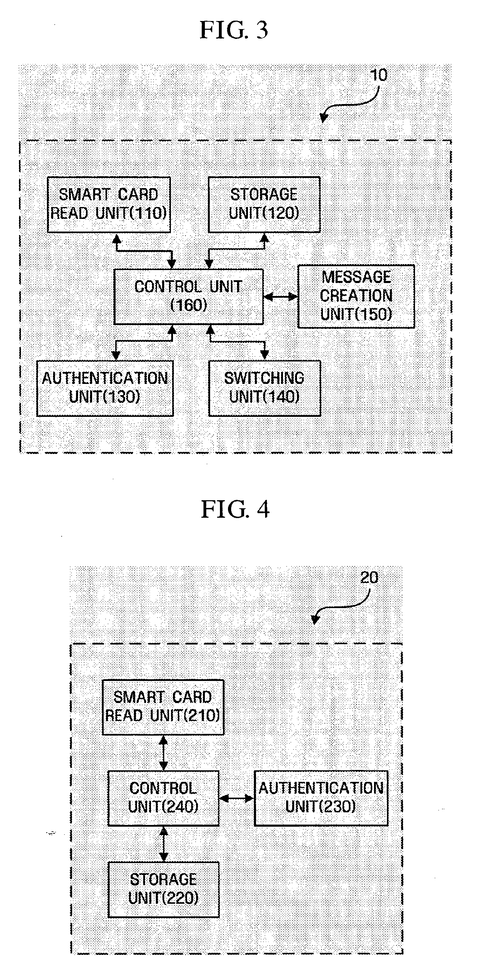

Figure 3 is a block diagram illustrating the control point 10 of the system of executing the security function using the smart card 30 according to an exemplary embodiment of the present invention.

As shown in Figure 3, the control point 10 includes a smart card read unit 110, a storage unit 120, an authentication unit 130, a switching unit 140, a message creation unit 150, and a control unit 160.

The term 'unit', as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to be executed on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and units may be combined into fewer components and units or further separated into additional components and units. Further, the components and units can be implemented to reproduce one or more CPUs within a device or a security multimedia card.

The smart card read unit 110 reads the smart card 30 when the smart card 30 comes in contact with the control point 10 or is inserted therein, thereby acquiring the public key of the security console stored in the smart card 30. Here, the control point 10 verifies an electronic signature transmitted from the smart card 30 by using the acquired public key.

The storage unit 120 stores the public key of the security console that the smart card read unit 110 has acquired from the smart card 30.

The authentication unit 130 verifies the electronic signature transmitted from the smart card 30 by using the public key stored in the storage unit 120.

Furthermore, the authentication unit 130 creates a random number and then transmits the random number to the smart card 30 so as to prevent the electronic signature created in the smart card 30 from being illegally used.

The switching unit 140 switches the control point 10 to a security console that can manage an access control list of a predetermined device if the electronic signature transmitted from the smart card 30 is determined to be valid. In addition, when a user requests the switching unit 140 to return the security console to the control point 10, the switching unit 140 switches the security console to the control point 10 that controls an operation of a controlled device.

The message creation unit 150 creates an ownership acquisition request message for acquiring a right capable of editing the access control list of the controlled devices. Here, the ownership acquisition request message includes the public key of the security console and the electronic signature.

Further, the message creation unit 150 creates a message that requests an electronic signature and a set session key request message and transmits the messages to the smart card 30.

The control unit 160 controls operations of the respective functional blocks 110 to 150 forming the control point 10.

Figure 4 is a block diagram illustrating a controlled device 20 of the system of executing the security function using the smart card 30 according to an exemplary embodiment of the present invention.

As shown in Figure 4, the controlled device 20 includes a smart card read unit 210, a storage unit 220, an authentication unit 230, and a control unit 240.

The smart card read unit 210 reads the smart card 30 when the smart card 30 comes in contact with the controlled device 20 or is inserted therein, thereby acquiring the public key of the security console or the hash value of the public key. Here, the smart card read unit 210 is a module used in a case when a user wishes to acquire ownership with respect to the security console by using a smart card, but the smart card read unit 210 is not used in a case when the user wishes to acquire the ownership with respect to the security console by using a password. In the present invention, a case in which the determination on ownership acquisition with respect to the security console is made by using the smart card 30 will be described as an example.

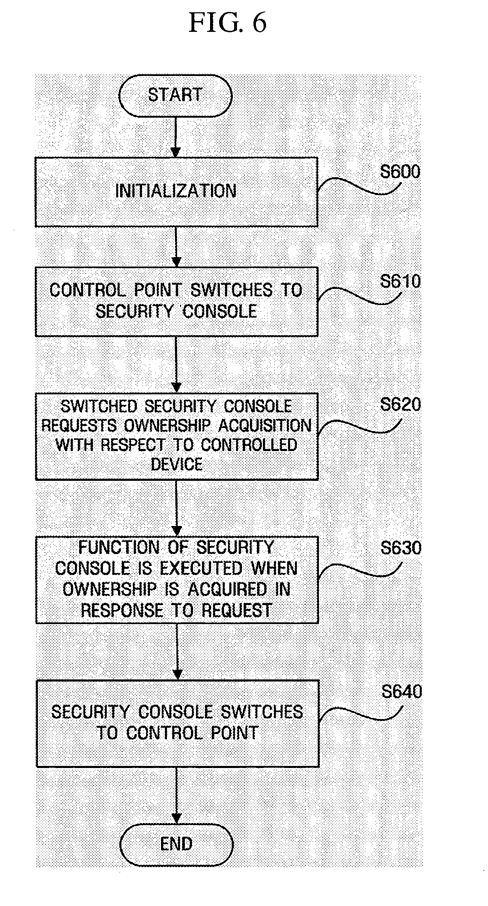

Further, the smart card read unit 210 can acquire the public key of the security console or the hash value of the public key from the smart card 30 during the initialization of the controlled device 20. Detailed explanation on this will be made later in an initialization process with reference to Figure 6.

The storage unit 220 stores the public key acquired by the reading of the smart card read unit 210 and the hash value of the public key. Here, the public key and the hash value of the public key are used to verify whether a corresponding security console is authorized when the security console requests the ownership acquisition.

The authentication unit 230 checks the validity of an electronic signature transmitted form the smart card 30 by using the public key stored in the storage unit 220. In this case, if the electronic signature is determined to be valid on the basis of the public key, the authentication unit 230 permits the control point 10 (for example, a control point that performs the security console function) to acquire the ownership so that the control point 10 can edit an access control list (ACL) of, for example, a controlled device.

Further, the authentication unit 230 calculates the hash value by using the public key transmitted from the security console and then determines whether to permit the security console to acquire the ownership (that is, access to the access control list) by comparing the hash value (or the hash value transmitted from the smart card 30 after the initialization) with the calculated hash value.

The control unit 240 controls operations of the respective functional blocks 210 to 230 forming the controlled device 20.

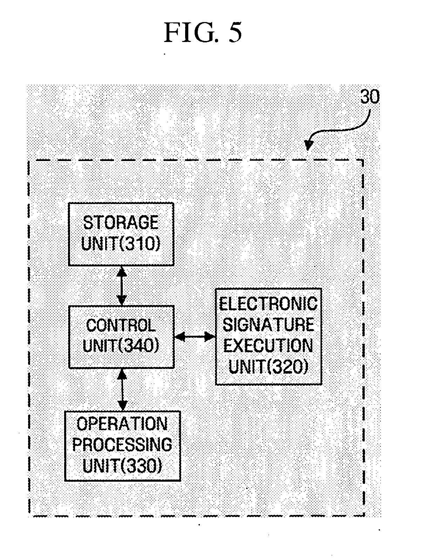

Figure 5 is a block diagram illustrating the smart card 30 of the system of executing the security function using the smart card 30 according to an exemplary embodiment of the present invention.

As shown in Figure 5, the smart card 30 includes a storage unit 310, an electronic signature execution unit 320, an operation processing unit 330, and a control unit 340.

The storage unit 310 stores a pair of public keys of a security console. In addition, the storage unit 310 may store hash values of the public keys.

When a random number is transmitted from the control point 10, the electronic signature execution unit 320 creates an electronic signature including a random number by using a secret key stored in the storage unit 310. The electronic signature execution unit 320 creates the electronic signature including the random number in order to prevent a message created by the smart card 30 from being illegally used. At this time, a number set beforehand for each message is included.

The operation processing unit 330 calculates the hash value of the public key by using the public key stored in the storage unit 310. Here, as algorithm for calculating the hash value, MD5 or SHA-1 is used, for example.

The control unit 340 controls operations of the respective functional blocks 310 to 330 forming the controlled device 20.

Figure 6 is a flow chart illustrating a method of performing a security function using the smart card according to an exemplary embodiment of the present invention.

First, a user performs an initialization process of storing a public key of a security console, which is stored in the smart card 30, in a newly provided device (for example, a control point and a controlled device) (S600) . That is, in the initialization process, the smart card 30 that executes a security function for the control point 10 and the controlled device 20 is registered.

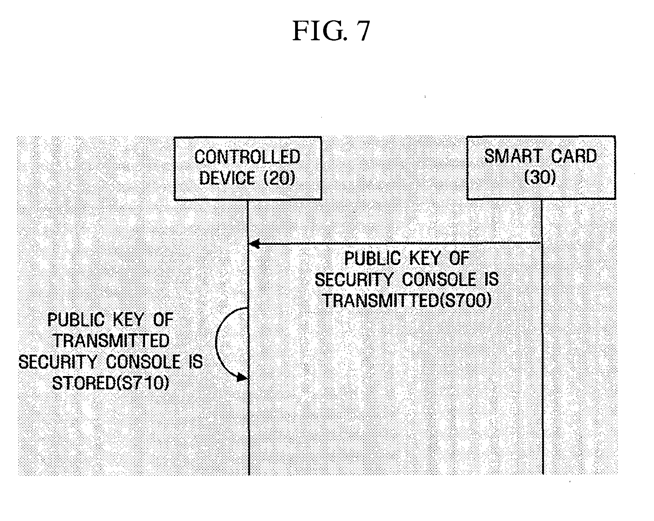

For example, a user transmits the public key of the security console stored in the smart card 30 by inserting the smart card 30 into the newly provided controlled device 20 or bringing the smart card 30 into contact with the newly provided controlled device 20. The initialization process will be described in detail later with reference to Figure 7.

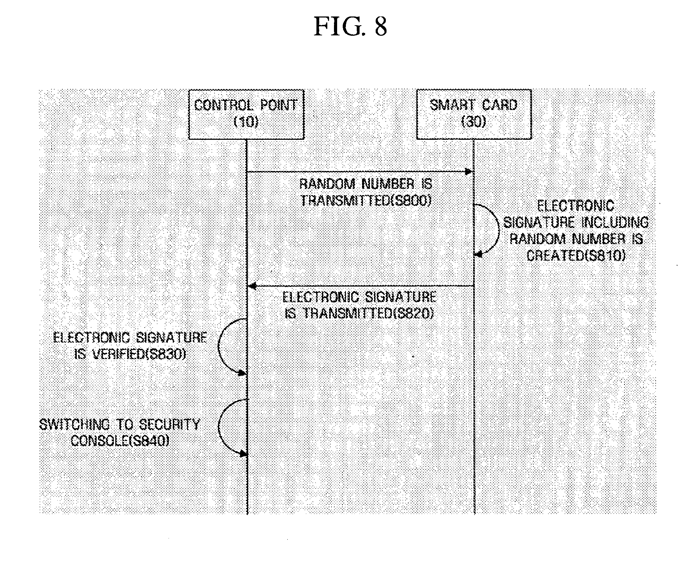

Then, the user switches the control point 10 to the security console so as to edit an access control list of the controlled device 20 by using the smart card 30 (S610) . The process of switching the control point 10 to the security console will be described in detail later with reference to Figure 8.

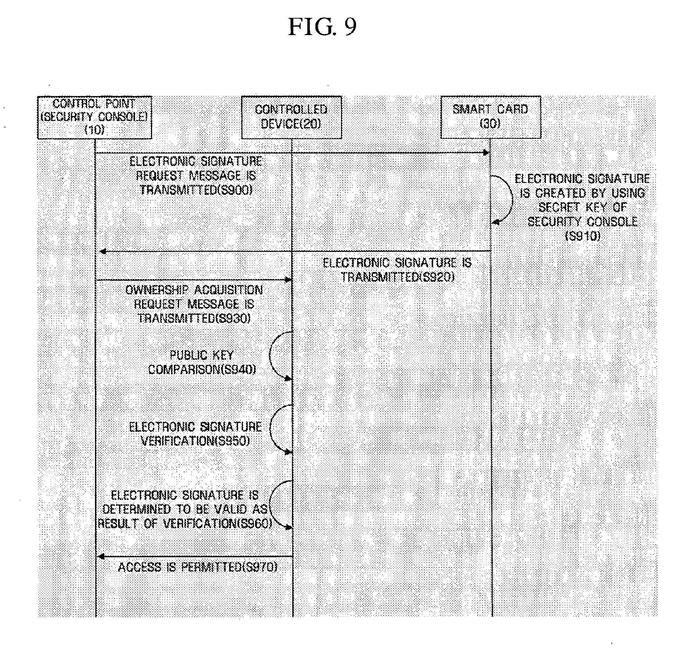

Thereafter, when the control point 10 switches to the security console, the security console requests ownership acquisition with respect to the controlled device 20 (S620) . If the controlled device 20 permits a right of capable of editing the access control list in response to the ownership acquisition request of the security console, the security console can edit the access control list of the controlled device 20 (S630) Here, the ownership acquisition process includes a method of using an electronic signature and a method of using a hash value, and the ownership acquisition process will be described in detail later with reference to Figures 9 to 11.

Then, when the user wishes to switch the security console back to the control point 10, the user removes the smart card 30 that is inserted in the control point 10 or is in contact with the control point 10 (S640) .

As such, since the control point 10 also performs the function of the security console, it is possible to edit the access control list of the controlled device 20 without preparing a separate security console device.

Figure 7 is a flow chart illustrating the initialization process shown in Figure 6 in detail, according to an exemplary embodiment of the invention.

As shown in Figure 7, when a new controlled device 20 is provided, a user transmits to the new controlled device 20 a public key of a security console stored in the smart card 30 (S700). Here, a method of transmitting to the controlled device 20 the public key of the security console stored in the smart card 30 includes bringing the smart card 30 into contact with the new controlled device 20 or inserting the smart card 30 into the new controlled device 20. In this case, the new controlled device 20 can acquire the public key by reading the smart card 30.

Then, the controlled device 20 stores the public key of the security console that has been acquired by reading the smart card 30 (S710) . Here, the controlled device 20 determines whether to permit the security console to access the access control list on the basis of the public key acquired from the smart card 30.

Further, the controlled device 20 may acquire a hash value of the public key by reading the smart card 30. Then, the controlled device 20 may store the acquired hash value of the public key and then determine whether to permit the security console to access the access control list by calculating and comparing hash values on the basis of the public key of the security console from which an ownership acquisition request message has been transmitted.

Figure 8 is a flow chart illustrating a detailed process in which the control point 10 switches to the security console, which is shown in Figure 6, according to an exemplary embodiment of the invention.

First, when a user inserts the smart card 30 into the control point 10 or bringing the smart card 30 into contact with the control point 10, the authentication unit 130 of the control point 10 creates a random number and then transmits the random number to the smart card 30 (S800) .

Then, the electronic signature execution unit 320 of the smart card 30 creates an electronic signature, which includes the random number transmitted from the control point 10, by using a secret key of the security console stored in the storage unit 310 (S810) . The electronic signature is created in order to include the random number is to prevent the electronic signature created by the smart card 30 from being illegally used in other devices. At this time, a number set beforehand for each message is included.

Then, when the created electronic signature is transmitted to the control point 10 (S820), the control point 10 verifies the electronic signature transmitted from the smart card 30 by using the public key of the security console that has been acquired from the smart card 30 during the initialization process (S830) . If the electronic signature is determined to be valid, the control point 10 switches to the security console (S840) . Here, in the case when the control point 10 switches to the security console, the security console uses a pair of public keys of the security console stored in the smart card 30 instead of the pair of public keys used by the control point 10.

Figure 9 is a flow chart illustrating a detailed process in which the security console acquires the ownership, which is shown in Figure 6, according to an exemplary embodiment of the invention. Here, an example will be described in which the controlled device 20 verifies an electronic signature transmitted from the security console, which has requested the ownership acquisition, by using the public key of the smart card 30 and then determines whether to grant to the security console a right to edit the access control list on the basis of a result of the verification.

First, the security console (that is, the control point 10 that performs the security console function) transmits to the smart card 30 a message of requesting an electronic signature in order to acquire ownership with respect to the controlled device 20 (S900) . In response to the message, the smart card 30 creates an electronic signature by using a secret key of the smart card 30 and then transmits the electronic signature to the security console (S910 and S920) . Here, the ownership acquisition means acquiring a right capable of editing the access control list of the controlled device 20. Accordingly, the validity of the electronic signature created by the smart card 30 should be verified to acquire the ownership.

Subsequently, the security console creates an ownership acquisition request message and then transmits the ownership acquisition request message to the controlled device 20 (S930) . Here, the ownership acquisition request message includes the public keys of the security console and the electronic signature.

Then, the controlled device 20 receives the ownership acquisition request message that has been transmitted from the security console and then detects the public keys and the electronic signature from the ownership acquisition request message. Then, the controlled device 20 checks whether the detected public keys and public keys stored during the initialization process are equal to each other (S940) .

As a result of the comparison, if the detected public keys are equal to the public keys stored during the initialization process, the controlled device 20 checks the validity of the electronic signature transmitted from the security console by verifying the detected electronic signature by means of the public keys (S950).

Then, if the electronic signature is determined to be valid (S960), the controlled device 20 permits the security console to access the access control list (S970) . That is, the controlled device 20 grants ownership to the security console by adding the security console in the owners list, and accordingly, the security console can obtain the right to edit the access control list of the controlled device 20.

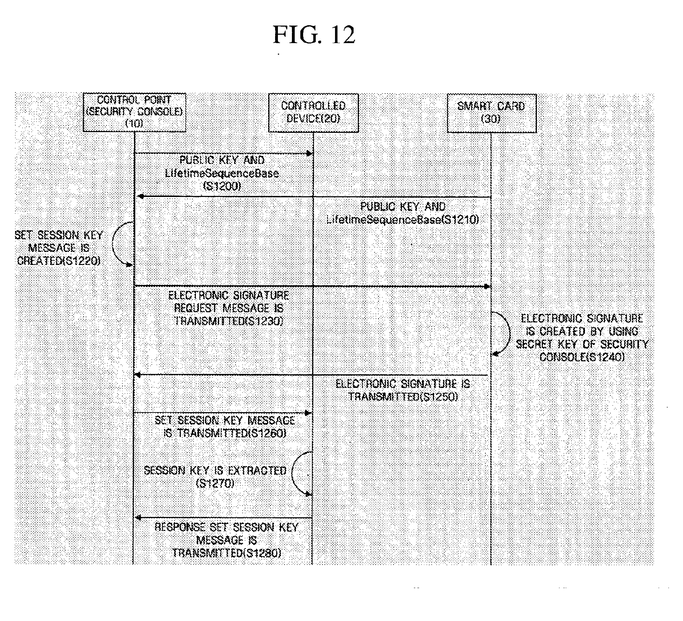

Here, the security console that has acquired the ownership with respect to the controlled device 20 can create a session for communications between the security console and the controlled device 20 and read out or change the access control list of the controlled device 20 through the session. The process of creating the session between the security console and the controlled device 20 will be described later with reference to Figure 12.

On the other hand, if the detected public keys are not equal to the public keys stored during the initialization process as the comparison result, the security console cannot acquire the ownership with respect to the access control list of the controlled device 20, and as a result, the security console cannot obtain the right to edit the access control list of the controlled device 20.

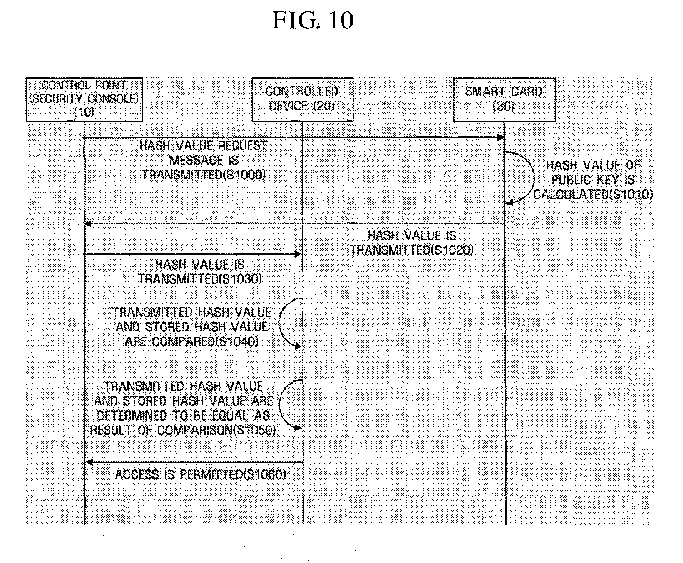

Figure 10 is a flow chart illustrating a detailed process of executing the function of the security console, which is shown in Figure 6, according to another exemplary embodiment of the present invention. Here, an example in which the controlled device 20 acquires the hash values of the public keys from the smart card 30 during the initialization process will be described. On the other hand, in the case when the ownership authentication is performed by using the hash values of the public keys, the ownership acquisition process may not be performed.

First, the security console (that is, the control point 10 that performs the security console function) transmits to the smart card 30 a message of requesting the hash values of the public keys in order to perform the function of the security console (S1000) . In response to the message, the smart card 30 calculates the hash values of the public keys by using the public keys of the security console and then transmits the calculated hash values of the public keys to the security console (S1010 and S1020) . Here, as algorithm for calculating the hash values of the public keys, MD5 or SHA-1 is used, for example.

Then, the security console transmits to the controlled device 20 the hash values of the public keys transmitted from the smart card 30 (S1030), and the controlled device 20 compares the hash values of the public keys transmitted from the security console with the hash values of the public keys stored in the initialization process (S1040) .

As a result of the comparison, if it is determined that the hash values of the public keys transmitted from the security console are equal to the hash values of the public keys stored in the initialization process (S1050), the controlled device 20 permits the access of the security console(S1060). That is, the controlled device 20 grants ownership to the security console by adding the hash values of the public keys transmitted from the security console in the owners list. Thus, the security console can obtain the right to edit the access control list of the controlled device 20.

Further, the security console that has acquired the ownership with respect to the controlled device 20 can create a session for communications between the security console and the controlled device 20 and read out or change the access control list of the controlled device 20 through the session. The process of creating the session between the security console and the controlled device 20 will be described later with reference to Figure 12.

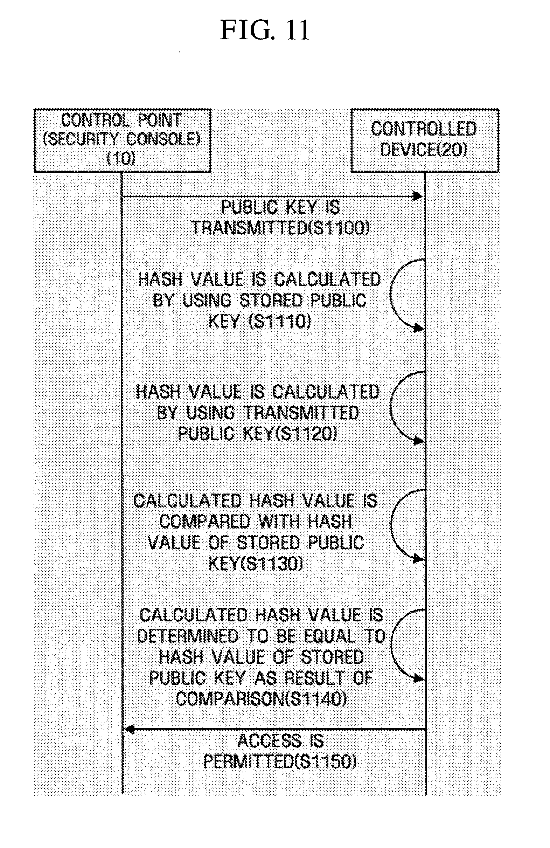

Figure 11 is a flow chart illustrating a detailed process of executing a function of the security console in detail, which is shown in Figure 6, according to still another exemplary embodiment of the present invention. Here, an example in which the controlled device 20 calculates the hash values of the public keys will be described.

First, when the security console transmits the public keys to the controlled device 20 (S1100), the controlled device 20 calculates the hash values of the public keys by using the public keys stored in the initialization process (S1110) . Here, as algorithm for calculating the hash values of the public keys, MD5 or SHA- 1 is used, for example.

Then, the controlled device 20 calculates the hash values of the public keys by using the public keys transmitted from the security console (S1120), and then compares the calculated hash values of the public keys with the hash values of the public keys stored in the initialization process in order to check whether the calculated hash values of the public keys are equal to the hash values of the public keys stored in the initialization process (S1130) .

As a result of the comparison, if it is determined that the calculated hash values of the public keys are equal to the hash values of the public keys stored in the initialization process (S1140), the controlled device 20 permits the access of the security console (S1150). That is, the controlled device 20 grants ownership to the security console by adding the calculated hash values of the public keys in the owners list. Thus, the security console can obtain the right to edit the access control list of the controlled device 20.

Further, the security console that has acquired the ownership with respect to the controlled device 20 can create a session for communications between the security console and the controlled device 20 and read out or change the access control list of the controlled device 20 through the session. Hereinafter, the process of creating the session between the security console and the controlled device 20 will be described with reference to Figure 12.

Figure 12 is a flow chart illustrating a process of creating a set session key in a method of executing the security function using the smart card according to an exemplary embodiment of the present invention. Here, Set Session keys, which is an action for creating a session key, means creating a symmetrical key that is required for an electronic signature or encryption with respect to a message transmitted between the security console or the control point 10 and the controlled device 20. In the present invention, a case in which a session between the security console and the controlled device 20 is created will be described as an example.

That is, the security console or the control point 10 should create a session before sending/receiving a message to/from the controlled device 20 and then send/receive the message to/from the controlled device 20 through the session for the safety of communications. Here, creating a session means creating a session key, and sending/receiving a message through a session means an electronic signature or encryption with respect to the message by using the session key.

For example, the security console that has acquired the ownership with respect to the controlled device 20 by performing the ownership acquisition process can create a session for communications between the security console and the controlled device 20 and read out or change the access control list of the controlled device 20 through the session.

First, the security console requests the public keys and a LifetimeSequenceBase value of the controlled device 20 for which the security console desires to create a session (S1200) . Here, the public keys and the LifetimeSequenceBase value of the controlled device 20 are values that are necessary to create parameters to be inserted in a Set Session Key message or create the electronic signature with respect to the message.

Thereafter, the security console receives the public keys and the LifetimeSequenceBase value from the controlled device 20 (S1210) and then creates the Session Key message through the public keys and the LifetimeSequenceBase value (S1220) . At this time, parameters shown in Table 1 are needed to create the Set Session Key message.

[Table 1]

| Argument(s) | Direction | Related State Variable |
|---|---|---|
| EncipheredBulkKey | IN | A_ARG_TYPE_base64 |
| BulkAlgorithm | IN | A_ARG_TYPE_string |
| Ciphertext | IN | A_ARG_TYPE_base64 |
| CPKeyID | IN | A_ARG_TYPE_int |
| DeviceKeyID | $OUT^R$ | A_ARG_TYPE_int |
| SequenceBase | OUT | A_ARG_TYPE_string |

Here, the session key messages that are created by using the parameters shown in table 1 will be explained.

First, a format of a message that is transmitted from the security console (or the control point) to the controlled device is as follows:

$$K_c\{SetSessionKeys(P_D[K_{Bulk}, IV_{Bulk}], Algorithm_{Bulk}, K_{Bulk,IVbulk}[Keys], CPKeyID)\}.$$

Here, C denotes a security console (or a control point), and D denotes a controlled device. In addition, {} denotes an electronic signature, and [] denotes encryption.

Further, a format of a message that is transmitted from the controlled device to the security console (or the control point) is as follows:

$$S_{DC}\{SetSessionKeysResponse(DeviceKeyID, SequenceBase)\}.$$

Here, C denotes a security console (or a control point), and D denotes a controlled device. In addition, { } denotes an electronic signature, and [ ] denotes encryption.

That is, the security console creates a symmetrical key used for a session, assigns an ID (CPKey ID) for the created key, and creates a bulk key $K_{Bulk}$ used to encode the symmetrical key. At this time, EncipheredBulkKey argument is obtained by encoding the created bulk key by means of the public key $P_D$ of a controlled device for which a session is to created, algorithm used to encode the bulk key by means of the public key of the controlled device is stated by BulkAlgorithm argument, and Ciphertext argument can be created by encoding a key to be used for the session by means of the bulk key.

Then, an electronic signature is made on the created session key message by using the secret key $K_C$ of the security console. At this time, since the security console does not store the secret key, the security console requests the electronic signature of the smart card 30 that stores the secret key of the security console (S1230) .

In response to the request, the smart card 30 creates the electronic signature by using the secret key of the security console and then transmits the created electronic signature to the security console (S1240 and S1250). Then, the security console transmits to the controlled device 20 the set session key message including the electronic signature (S1260).

Thereafter, the controlled device 20 extracts the session key from the received set session key message and then stores the extracted session key (S1270), assigns the ID DevicekeyID for the extracted session key, and creates a response set session key message and then transmits the created set session key message to the security console (S1280) .

As described above, it is possible to perform safe data transmission between the security console and the controlled device 20 through the created session.

On the other hand, the control point 10 operating as the security console can perform a function of a control point again according to a user's intention.

For example, when the user directly presses a return button for returning to the control point 10, which is provided on a device, takes out the smart card 30 inserted in the control point 10, or removes the smart card 30 located within a close range, the control point 10 operating as the security console returns to the control point 10 that performs the control point function. When the control point 10 operating as the security console returns to the control point 10 that controls controlled devices, the control point 10 controls the controlled devices by using a pair of public keys used by an original control point instead of the pair of public keys stored in the smart card 30.

According to the apparatus and method for executing the security function using the smart card according to the exemplary embodiments of the present invention, it is possible to obtain one or more effects as follows.

That is, since it is possible to switch the control point to the security console, a user can switch a control point, which is closest to the user, to the security console by using a smart card without a need to access a specific security console and then edit an access control list of a controlled device through the switched security console.

Further, since an operation related to a secret key of the security console is performed by only the smart card, it is possible to prevent an unauthorized device from acquiring a right of the security console.

Furthermore, since it is possible to use an existing control point as the security console by switching the existing control point to the security console without preparing a separate physical security console, cost can be saved.

In addition, since an electronic signature is created through the smart card, it is possible to safely switch among security consoles without a secret key revealed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A system for executing a security function, said system comprising an apparatus (10) and a smart card (30) and being part of a Universal Plug and Play (UPnP) security framework;
wherein the smart card (30) comprises:

a storage unit (310) which stores a pair of public keys of a security console; and
an electronic signature execution unit (320) which generates an electronic signature by using a secret key stored in the storage unit (310);
wherein the apparatus (10) comprises:

a smart card read unit (110) which acquires a public key of a security console (10) by reading the smart card (30);
an authentication unit (130) which determines whether an electronic signature transmitted from the smart card (30) is valid by using the public key of the security console (10); and
a switching unit (140) which switches the apparatus (10) from functioning as a control point to a security console (10) in said UPnP security framework for acquiring ownership with respect to a controlled device (20) in said UPnP security framework using the pair of public keys stored in the smart card (30) if the electronic signature is determined to be valid .

**2.** The system of claim 1, further comprising:

a storage unit (120) which stores the public key of the security console (10) acquired from the smart card (30); and
a message creation unit (150) which creates a message that requests an electronic signature of the smart card (30) and a message that requests ownership acquisition of the controlled device (20).

**3.** The system of claim 1, further comprising:

an operation processing unit (330) which calculates hash values of the public keys by using the public keys stored in the storage unit (310).

**4.** A method of executing a security function in a Universal Plug and Play (UPnP)_security framework using a smart card (30), the method comprising:

switching a control point (10) in said UPnP security framework to a security console (10) in said UPnP security framework that manages an access control list of a controlled device (20) in said UPnP security framework;
requesting ownership acquisition with respect to the controlled device (20) by the switched security console (10); and
executing a function of the security console (10) if the ownership is acquired as a result of the requesting;
wherein the switching of the control point (10) to the security console (10) comprises:

transmitting a random number from the control point (10) to the smart card (30);
receiving an electronic signature including the random number by the control point (10) from the smart card (30);
verifying the transmitted electronic signature using a public key stored at the time of initialization; and
switching the control point (10) to security console (10) if it is determined that the electronic signature is valid in the verification using the pair of public keys stored in the smart card (30) .

**5.** The method of claim 4, wherein the requesting of the ownership acquisition with respect to the controlled device (20) by the switched security console (10) comprises:

receiving an ownership acquisition request message from the control point (10);
detecting a public key and an electronic signature from the received ownership acquisition request message so as to verify validity of the electronic signature; and
permitting ownership with respect to the access control list if it is determined that the electronic signature is valid in the verification.

**6.** The method of claim 5, wherein the electronic signature is created by the smart card (30).

**7.** The method of claim 4, wherein the requesting of the ownership acquisition with respect to the controlled device (20) by the security console (10) comprises:

receiving a first hash value of a public key from the control point (10);
comparing the first hash value with a second hash value of a public key stored at a time of initialization; and
permitting ownership with respect to the access control list if it is determined that the first hash value is equal to the second hash value as a result of the comparing.

**8.** The method of claim 7, wherein the hash value received from the control point (10) is calculated by the smart card (30).

**9.** The method of claim 4, wherein the requesting of the ownership acquisition with respect to the controlled device (20) by the switched security console (10) comprises:

receiving a public key from the control point (10);
calculating a first hash value of the public key using the received public key;
comparing the first hash value with a second hash value calculated using a public key stored at a time of initialization; and
permitting ownership with respect to the access control list if it is determined that the first hash value is equal to the second hash value as a result of the comparing.

**10.** The method of any of claims 4 to 9, wherein, if the security console (10) executes the security console (10) function, the security console (10) communicates with the controlled device (20) by creating a session key.

**11.** The method of any of claims 4 to 10, further comprising transmitting a public key of the security console (10) using the smart card (30) if the control point (10) and the controlled device (20) are initialized.

## Patentansprüche

1. System zum Ausführen einer Sicherheitsfunktion, wobei das System eine Vorrichtung (10) und eine Chipkarte (30) umfasst und Teil einer Universal- Plug- and- Play- (UPnP)- Sicherheitsstruktur ist;
wobei die Chipkarte (30) umfasst:

   eine Speichereinheit (310), die ein Paar öffentlicher Schlüssel einer Sicherheitskonsole speichert; und
   eine Elektronische-Signatur-Ausführungseinheit (320), die eine elektronische Signatur durch Verwenden eines in der Speichereinheit (310) gespeicherten geheimen Schlüssels erzeugt;
   wobei die Vorrichtung (10) umfasst:

      eine Chipkartenleseeinheit (110), die einen öffentlichen Schlüssel einer Sicherheitskonsole (10) durch Lesen der Chipkarte (30) erlangt;
      eine Authentifizierungseinheit (130), die bestimmt, ob eine aus der Chipkarte (30) gesendete elektronische Signatur gültig ist, durch Verwenden des öffentlichen Schlüssels der Sicherheitskonsole (10); und
      eine Umschalteinheit (140), die die Vorrichtung (10) umschaltet von deren Funktion als Steuerungspunkt auf jene als Sicherheitskonsole (10) in der UPnP-Sicherheitsstruktur zwecks Erlangens von Inhaberschaft in Bezug auf ein gesteuertes Gerät (20) in der UPnP-Sicherheitsstruktur unter Verwendung des in der Chipkarte (30) gespeicherten Paars öffentlicher Schlüssel, falls bestimmt wird, dass die elektronische Signatur gültig ist.

2. System nach Anspruch 1, das weiterhin umfasst:

   eine Speichereinheit (120), die den aus der Chipkarte (30) erlangten öffentlichen Schlüssel der Sicherheitskonsole (10) speichert; und
   eine Mitteilungserstellungseinheit (150), die eine Mitteilung, die eine elektronische Signatur der Chipkarte (30) anfordert, und eine Mitteilung, die eine Inhaberschaftserlangung des gesteuerten Geräts (20) anfordert, erstellt.

3. System nach Anspruch 1, das weiterhin umfasst:

   eine Operationsverarbeitungseinheit (330), die Hashwerte der öffentlichen Schlüssel berechnet durch Verwenden der in der Speichereinheit (310) gespeicherten öffentlichen Schlüssel.

4. Verfahren zum Ausführen einer Sicherheitsfunktion in einer Universal- Plug- and- Play- (UPnP)- Sicherheitsstruktur unter Verwendung einer Chipkarte (30), wobei das Verfahren umfasst:

   Umschalten eines Steuerungspunkts (10) in der UPnP- Sicherheitsstruktur zu einer Sicherheitskonsole (10) in der UPnP- Sicherheitsstruktur, die eine Zugriffskontrollliste eines gesteuerten Geräts (20) in der UPnP- Sicherheitsstruktur verwaltet;
   Anfordern von Inhaberschaftserlangung in Bezug auf das gesteuerte Gerät (20) durch die umgeschaltete Sicherheitskonsole (10); und
   Ausführen einer Funktion der Sicherheitskonsole (10), falls die Inhaberschaft als Ergebnis des Anforderns erlangt wird;
   wobei das Umschalten des Steuerungspunkts (10) zur Sicherheitskonsole (10) umfasst:

      Senden einer Zufallszahl aus dem Steuerungspunkt (10) zur Chipkarte (30);
      Empfangen einer elektronischen Signatur, die die Zufallszahl beinhaltet, durch den Steuerungspunkt (10) aus der Chipkarte (30);
      Verifizieren der gesendeten elektronischen Signatur unter Verwendung eines zum Initialisierungszeitpunkt gespeicherten öffentlichen Schlüssels; und
      Umschalten des Steuerungspunkts (10) zur Sicherheitskonsole (10), falls in der Verifizierung bestimmt wird, dass die elektronische Signatur gültig ist, unter Verwendung des in der Chipkarte (30) gespeicherten Paars öffentlicher Schlüssel.

5. Verfahren nach Anspruch 4, wobei das Anfordern der Inhaberschaftserlangung in Bezug auf das gesteuerte Gerät (20) durch die umgeschaltete Sicherheitskonsole (10) umfasst:

   Empfangen einer Inhaberschaftserlangungs-Anforderungsmitteilung aus dem Steuerungspunkt (10);

Erfassen eines öffentlichen Schlüssels und einer elektronischen Signatur aus der empfangenen Inhaberschaftserlangungs-Anforderungsmitteilung, um die Gültigkeit der elektronischen Signatur zu verifizieren; und
Gewähren von Inhaberschaft in Bezug auf die Zugriffskontrollliste, falls in der Verifizierung bestimmt wird, dass die elektronische Signatur gültig ist.

**6.** Verfahren nach Anspruch 5, wobei die elektronische Signatur durch die Chipkarte (30) erstellt wird.

**7.** Verfahren nach Anspruch 4, wobei das Anfordern der Inhaberschaftserlangung in Bezug auf das gesteuerte Gerät (20) durch die Sicherheitskonsole (10) umfasst:

Empfangen eines ersten Hashwerts eines öffentlichen Schlüssels aus dem Steuerungspunkt (10);
Vergleichen des ersten Hashwerts mit einem zweiten Hashwert eines zu einem Initialisierungszeitpunkt gespeicherten öffentlichen Schlüssels; und
Gewähren von Inhaberschaft in Bezug auf die Zugriffskontrollliste, falls als Ergebnis des Vergleichs bestimmt wird, dass der erste Hashwert gleich dem zweiten Hashwert ist.

**8.** Verfahren nach Anspruch 7, wobei der aus dem Steuerungspunkt (10) empfangene Hashwert durch die Chipkarte (30) berechnet wird.

**9.** Verfahren nach Anspruch 4, wobei das Anfordern der Inhaberschaftserlangung in Bezug auf das gesteuerte Gerät (20) durch die umgeschaltete Sicherheitskonsole (10) umfasst:

Empfangen eines öffentlichen Schlüssels aus dem Steuerungspunkt (10);
Berechnen eines ersten Hashwerts des öffentlichen Schlüssels unter Verwendung des empfangenen öffentlichen Schlüssels;
Vergleichen des ersten Hashwerts mit einem zweiten Hashwert, der unter Verwendung eines zu einem Initialisierungszeitpunkt gespeicherten öffentlichen Schlüssels berechnet wird; und
Gewähren von Inhaberschaft in Bezug auf die Zugriffskontrollliste, falls als Ergebnis des Vergleichs bestimmt wird, dass der erste Hashwert gleich dem zweiten Hashwert ist.

**10.** Verfahren nach einem der Ansprüche 4 bis 9, wobei die Sicherheitskonsole (10), falls die Sicherheitskonsole (10) die Sicherheitskonsolen- (10)- Funktion ausführt, mit dem gesteuerten Gerät (20) durch Erstellen eines Sitzungsschlüssels kommuniziert.

**11.** Verfahren nach einem der Ansprüche 4 bis 10, das weiterhin das Senden eines öffentlichen Schlüssels der Sicherheitskonsole (10) unter Verwendung der Chipkarte (30) umfasst, falls der Steuerungspunkt (10) und das gesteuerte Gerät (20) initialisiert werden.

## Revendications

**1.** Système d'exécution d'une fonction de sécurité, ledit système comprenant un appareil (10) et une carte à puce (30) et appartenant à une infrastructure de sécurité UPnP (Universal Plug and Play) ;
dans lequel la carte à puce (30) comprend :

une unité de stockage (310) qui stocke une paire de clés publiques d'une console de sécurité ; et
une unité d'exécution de signature électronique (320) qui génère une signature électronique au moyen d'une clé secrète stockée dans l'unité de stockage (310) ;
dans lequel l'appareil (10) comprend :

une unité de lecture de carte à puce (110) qui acquiert une clé publique d'une console de sécurité (10) en lisant la carte à puce (30) ;
une unité d'authentification (130) qui détermine si une signature électronique transmise par la carte à puce (30) est valide en utilisant la clé publique de la console de sécurité (10) ; et
une unité de basculement (140) qui effectue le basculement de l'appareil (10) d'un fonctionnement comme point de contrôle en un fonctionnement comme console de sécurité (10) au sein de ladite infrastructure de sécurité UPnP pour acquérir la propriété par rapport à un dispositif contrôlé (20) de ladite infrastructure de sécurité UPnP au moyen de la paire de clés publiques stockées dans la carte à puce (30) s'il a été déterminé que la signature électronique est valide.

2. Système selon la revendication 1, comprenant en outre :

une unité de stockage (120) qui stocke la clé publique de la console de sécurité (10) acquise auprès de la carte à puce (30) ; et
une unité de création de message (150) qui crée un message demandant une signature électronique de la carte à puce (30) et un message demandant l'acquisition de propriété du dispositif contrôlé (20).

3. Système selon la revendication 1, comprenant en outre :

une unité de traitement de fonctionnement (330) qui calcule l'empreinte numérique des clés publiques en utilisant les clés publiques stockées dans l'unité de stockage (310).

4. Procédé d'exécution d'une fonction de sécurité dans une infrastructure de sécurité UPnP (Universal Plug and Play) utilisant une carte à puce (30), le procédé comprenant :

le basculement d'un point de contrôle (10) de ladite infrastructure de sécurité UPnP en une console de sécurité (10) de ladite infrastructure de sécurité UPnP qui gère une liste de contrôle d'accès d'un dispositif contrôlé (20) de ladite infrastructure de sécurité UPnP ;
une demande d'acquisition de propriété, relativement au dispositif contrôlé (20), par la console de sécurité (10) ayant basculé ; et
l'exécution d'une fonction de la console de sécurité (10) si la propriété est acquise à l'issue de la demande ;
dans lequel le basculement du point de contrôle (10) en ladite console de sécurité (10) comprend :

la transmission d'un nombre aléatoire issu du point de contrôle (10) vers la carte à puce (30) ;
la réception d'une signature électronique comportant le nombre aléatoire par le point de contrôle (10) de la part de la carte à puce (30) ;
la vérification de la signature électronique transmise, au moyen d'une clé publique stockée au moment de l'initialisation ; et
le basculement du point de contrôle (10) en console de sécurité (10) s'il a été déterminé que la signature électronique est valide au cours de la vérification mettant en oeuvre la paire de clés publiques stockées dans la carte à puce (30).

5. Procédé selon la revendication 4, dans lequel la demande d'acquisition de propriété relativement au dispositif contrôlé (20), par la console de sécurité (10) après basculement, comprend :

la réception d'un message de demande d'acquisition de propriété de la part du point de contrôle (10) ;
la détection d'une clé publique et d'une signature électronique à partir du message de demande d'acquisition de propriété reçu de manière à vérifier la validité de la signature électronique ; et
l'autorisation de propriété relativement à la liste de contrôle d'accès s'il est déterminé que la signature électronique est valide au cours de la vérification.

6. Procédé selon la revendication 5, dans lequel la signature électronique est créée par la carte à puce (30).

7. Procédé selon la revendication 4, dans lequel la demande d'acquisition de propriété relativement au dispositif contrôlé (20), par la console de sécurité (10), comprend :

la réception d'une première empreinte numérique d'une clé publique de la part du point de contrôle (10) ;
la comparaison de la première empreinte numérique avec une seconde empreinte numérique d'une clé publique stockée au moment de l'initialisation ; et
l'autorisation de propriété relativement à la liste de contrôle d'accès s'il a été déterminé que la première empreinte numérique est égale à la seconde empreinte numérique à l'issue de la comparaison.

8. Procédé selon la revendication 7, dans lequel l'empreinte numérique reçue de la part du point de contrôle (10) est calculée par la carte à puce (30).

9. Procédé selon la revendication 4, dans lequel la demande d'acquisition de propriété relativement au dispositif contrôlé (20), par la console de sécurité (10) après basculement, comprend :

la réception d'une clé publique de la part du point de contrôle (10) ;
le calcul d'une première empreinte numérique de la clé publique au moyen de la clé publique reçue ;
la comparaison de la première empreinte numérique avec une seconde empreinte numérique calculée au moyen d'une clé publique stockée au moment de l'initialisation ; et
l'autorisation de propriété relativement à la liste de contrôle d'accès s'il est déterminé que la première empreinte numérique est égale à la seconde empreinte numérique à l'issue de la comparaison.

**10.** Procédé selon l'une quelconque des revendications 4 à 9, dans lequel, si la console de sécurité (10) exécute la fonction de console de sécurité (10), la console de sécurité (10) communique avec le dispositif contrôlé (20) en créant une clé de session.

**11.** Procédé selon l'une quelconque des revendications 4 à 10, comprenant en outre la transmission d'une clé publique de la console de sécurité (10) au moyen de la carte à puce (30) si le point de contrôle (10) et le dispositif contrôlé (20) sont initialisés.

FIG. 1

1
2
3

FIG. 2

23
30
24
10
21
22

FIG. 3

10
SMART CARD
READ UNIT(110)
STORAGE
UNIT(120)
CONTROL UNIT
(160)
MESSAGE
CREATION
UNIT(150)
AUTHENTICATION
UNIT(130)
SWITCHING
UNIT(140)

FIG. 4

20
SMART CARD
READ UNIT(210)
CONTROL
UNIT(240)
AUTHENTICATION
UNIT(230)
STORAGE
UNIT(220)

FIG. 5

30
STORAGE UNIT(310)
CONTROL UNIT(340)
ELECTRONIC SIGNATURE EXECUTION UNIT(320)
OPERATION PROCESSING UNIT(330)

FIG. 6

START
INITIALIZATION
S600
CONTROL POINT SWITCHES TO SECURITY CONSOLE
S610
SWITCHED SECURITY CONSOLE REQUESTS OWNERSHIP ACQUISITION WITH RESPECT TO CONTROLLED DEVICE
S620
FUNCTION OF SECURITY CONSOLE IS EXECUTED WHEN OWNERSHIP IS ACQUIRED IN RESPONSE TO REQUEST
S630
SECURITY CONSOLE SWITCHES TO CONTROL POINT
S640
END

# FIG. 7

CONTROLLED
DEVICE (20)
SMART CARD
(30)
PUBLIC KEY OF
SECURITY CONSOLE IS
TRANSMITTED(S700)
PUBLIC KEY OF
TRANSMITTED
SECURITY CONSOLE IS
STORED(S710)

FIG. 8

CONTROL POINT
(10)
SMART CARD
(30)
RANDOM NUMBER IS
TRANSMITTED(S800)
ELECTRONIC
SIGNATURE INCLUDING
RANDOM NUMBER IS
CREATED(S810)
ELECTRONIC SIGNATURE
IS TRANSMITTED(S820)
ELECTRONIC SIGNATURE
IS VERIFIED(S830)
SWITCHING TO SECURITY
CONSOLE(S840)

FIG. 9

CONTROL POINT (SECURITY CONSOLE) (10)
CONTROLLED DEVICE(20)
SMART CARD (30)
ELECTRONIC SIGNATURE REQUEST MESSAGE IS TRANSMITTED(S900)
ELECTRONIC SIGNATURE IS CREATED BY USING SECRET KEY OF SECURITY CONSOLE (S910)
ELECTRONIC SIGNATURE IS TRANSMITTED(S920)
OWNERSHIP ACQUISITION REQUEST MESSAGE IS TRANSMITTED(S930)
PUBLIC KEY COMPARISON(S940)
ELECTRONIC SIGNATURE VERIFICATION(S950)
ELECTRONIC SIGNATURE IS DETERMINED TO BE VALID AS RESULT OF VERIFICATION(S960)
ACCESS IS PERMITTED(S970)

FIG. 10

CONTROL POINT (SECURITY CONSOLE) (10)
CONTROLLED DEVICE (20)
SMART CARD (30)
HASH VALUE REQUEST MESSAGE IS TRANSMITTED(S1000)
HASH VALUE OF PUBLIC KEY IS CALCULATED(S1010)
HASH VALUE IS TRANSMITTED(S1020)
HASH VALUE IS TRANSMITTED(S1030)
TRANSMITTED HASH VALUE AND STORED HASH VALUE ARE COMPARED(S1040)
TRANSMITTED HASH VALUE AND STORED HASH VALUE ARE DETERMINED TO BE EQUAL AS RESULT OF COMPARISON(S1050)
ACCESS IS PERMITTED(S1060)

FIG. 11

CONTROL POINT
(SECURITY CONSOLE)
(10)
CONTROLLED
DEVICE(20)
PUBLIC KEY IS
TRANSMITTED(S1100)
HASH VALUE IS CALCULATED
BY USING STORED PUBLIC
KEY (S1110)
HASH VALUE IS CALCULATED
BY USING TRANSMITTED
PUBLIC KEY(S1120)
CALCULATED HASH VALUE IS
COMPARED WITH HASH
VALUE OF STORED PUBLIC
KEY(S1130)
CALCULATED HASH VALUE IS
DETERMINED TO BE EQUAL TO
HASH VALUE OF STORED
PUBLIC KEY AS RESULT OF
COMPARISON(S1140)
ACCESS IS
PERMITTED(S1150)

FIG. 12

CONTROL POINT
(SECURITY CONSOLE)
(10)
CONTROLLED
DEVICE(20)
SMART CARD
(30)
PUBLIC KEY AND
LifetimeSequenceBase
(S1200)
PUBLIC KEY AND
LifetimeSequenceBase(S1210)
SET SESSION KEY
MESSAGE IS
CREATED(S1220)
ELECTRONIC SIGNATURE
REQUEST MESSAGE IS
TRANSMITTED(S1230)
ELECTRONIC SIGNATURE
IS CREATED BY USING
SECRET KEY OF SECURITY
CONSOLE(S1240)
ELECTRONIC SIGNATURE IS
TRANSMITTED(S1250)
SET SESSION KEY MESSAGE
IS TRANSMITTED(S1260)
SESSION KEY IS EXTRACTED
(S1270)
RESPONSE SET SESSION KEY
MESSAGE IS
TRANSMITTED(S1280)